# FASCICULE DE BREVET EUROPEEN

(11) **EP 1 515 861 B1**
(45) Date de publication et mention de la délivrance du brevet: **17.09.2008**
(21) Numéro de dépôt: 03725096.6
(22) Date de dépôt: 25.04.2003
(51) Int. Cl.: B60C 25/125, B60C 25/138

(54) **PROCEDE ET UNITE DE MONTAGE SUR UNE JANTE D UN PNEU POURVU D UN APPUI DE SECURITE**
VERFAHREN UND VORRICHTUNG ZUR MONTAGE EINES REIFENS MIT EINEM NOTLAUFSTÜTZKÖRPER AUF EINE FELGE
METHOD AND UNIT FOR MOUNTING ON A RIM A TYRE PROVIDED WITH A SAFETY SUPPORT

(30) Priorité: 10.06.2002 FR 0207076
(43) Date de publication de la demande: 23.03.2005
(73) Titulaire: Société de Technologie Michelin, 63000 Clermont-Ferrand (FR); Michelin Recherche et Technique S.A., 1763 Granges-Paccot (CH)
(72) Inventeur: Bocquet, Jean-Louis, F-63460 Combronde (FR); DUMON, Jean-Pierre, F-18230 Saint Doulchard (FR)
(74) Mandataire: Bauvir, Jacques
(86) Numéro de dépôt international: PCT/EP2003/004315
(87) Numéro de publication internationale: WO 2003/103994

(56) Documents cités:
- EP-A- 1 008 467
- EP-A- 1 048 496
- FR-A- 2 720 977

## Description

La présente invention concerne un procédé de montage, sur une jante de roue, d'une enveloppe de pneumatique et d'un appui de sécurité destiné à soutenir l'enveloppe en cas de chute de sa pression de gonflage, et une unité de montage pour la mise en oeuvre de ce procédé.

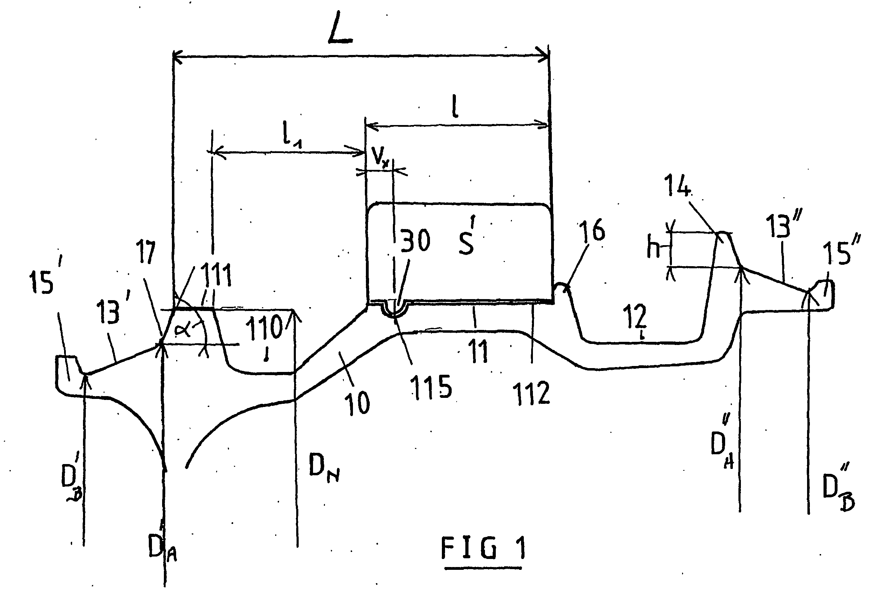

En relation avec la Fig. 1 ci-après présentée, il est connu d'utiliser, à titre de jante incluse avec ledit appui dans un ensemble monté qui est adapté pour pouvoir rouler dans des conditions satisfaisantes lorsque la pression de gonflage est réduite ou nulle, une jante 10 dont au moins l'un des sièges est incliné axialement vers l'extérieur, vu en section méridienne. Cette jante 10 est par exemple décrite dans le document de brevet international WO-A-01/08905, et elle peut former une roue avec un disque pouvant être fabriqué indépendamment de la jante 10 et être solidarisé avec celle-ci par la suite.

La jante 10 de la Fig. 1 comporte deux sièges de jante tronconiques 13' et 13" de diamètres inégaux respectivement D'_{A} et D"_{A}. Il faut entendre par diamètre d'un siège tronconique le diamètre de son extrémité circulaire la plus grande.

Les génératrices des deux sièges 13' et 13" sont inclinées vers l'extérieur, les diamètres D'_{A} et D"_{A} respectivement de leurs extrémités axialement intérieures étant plus grands que les diamètres D'_{B} et D"_{B} de leurs extrémités axialement extérieures. Les deux sièges 13' et 13" sont prolongés axialement vers l'extérieur par deux saillies 15' et 15" de hauteur réduite.

Un premier siège 13', qui par convention est destiné à être monté du côté extérieur d'un véhicule équipé des ensembles montés selon l'invention, est prolongé axialement à l'intérieur par une partie tronconique 17 inclinée d'un angle α relativement à la direction axiale. L'extrémité axialement intérieure de la partie tronconique 17 est aussi l'extrémité de la portée 11 de la jante 10, située axialement du côté extérieur du véhicule.

Cette portée 11 est constituée de deux zones d'appui 111 et 112 séparées par une rainure circonférentielle 110. Le diamètre de la portée 11 est D_{N}. La zone d'appui 112, qui est la plus proche axialement d'un second siège de jante 13" (par convention, destiné à être monté du côté intérieur du véhicule), a son extrémité la plus proche dudit second siège 13" qui est pourvue d'une saillie de positionnement 16 formant butée. Cette dernière est destinée à éviter le déplacement axial vers l'intérieur de l'appui S qui est destiné à être monté sur la portée 11.

Le second siège 13" est prolongé axialement vers l'intérieur par un rebord 14 de hauteur réduite h (de l'ordre de 3 à 4 mm). Ce rebord 14 délimite avec la butée de positionnement 16 une gorge de montage 12 pour la mise en place d'un second bourrelet de l'enveloppe de pneumatique qui est destiné à être à monté sur ce second siège 13".

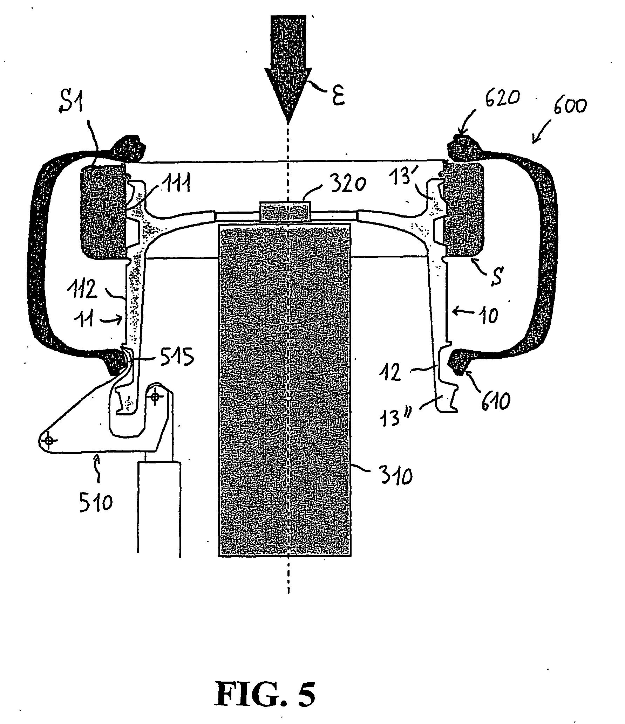

L'appui S de la Fig. 1, en matière caoutchouteuse, possède dans cet exemple une largeur axiale 1 très nettement inférieure à la largeur axiale L de la portée 11, puisque égale dans l'exemple de la Fig. 1 à 0,5 L. La largeur 1 de l'appui de soutien S doit en particulier être, dans le cas de la présence de la rainure circonférentielle 110, supérieure à la largeur 1₁ de ladite rainure. Compte tenu de la largeur axiale réduite de l'appui S, la première partie 111 de la portée 11 n'est utile que pour le montage et le démontage de l'appui S.

La portée 11 de la jante 10 est pourvue sur la face radialement supérieure de la zone d'appui 112 d'une rainure circonférentielle 115 se présentant, vue en section méridienne, sous forme d'un demi-cercle de rayon réduit de l'ordre de 4,5 mm, c'est-à-dire sensiblement de même valeur que la hauteur d'une saillie 15' ou 15".

La face radialement intérieure de l'appui S est par exemple pourvue d'une pluralité de protubérances circonférentielles 30 qui sont formées à intervalles de distance réguliers sur un même cercle et qui sont destinées à coopérer avec la rainure 115 de la portée d'appui 112 pour éviter tout déplacement axial vers le premier siège 13' de l'appui S en service.

Chaque protubérance 30 peut être constituée de la même matière caoutchouteuse que celle de l'appui S et elle peut être renforcée ou non. Ces protubérances 30 sont préférentiellement situées axialement entre l'extrémité de la face radialement intérieure dudit appui S axialement la plus proche du siège 13' et le miliéu de ladite face. La distance axiale Vₓ séparant l'axe moyen de chaque protubérance 30, qui est aussi axe moyen de la rainure 115, de l'extrémité de la zone d'appui 112 située du côté extérieur du véhicule, est comprise entre 0,1 et 0,2 fois la largeur axiale 1 de l'appui S, ceci notamment pour avoir un meilleur centrage de l'appui S sur la zone 112.

Le document de brevet français FR-A-2 720 977 décrit un procédé de montage, sur une telle jante, d'une enveloppe de pneumatique et d'un appui de sécurité amovible, qui comprend les étapes suivantes.

On présente sur la jante ledit second bourrelet du côté dudit premier siège, puis on fait glisser ce second bourrelet axialement sur la portée de jante de manière à l'introduire dans la gorge de montage. On positionne l'appui sur la jante et l'on monte ensuite ledit premier bourrelet sur ledit premier siège. Puis on met en oeuvre une étape d'extraction dudit second bourrelet consistant à l'extraire de ladite gorge de manière à l'amener axialement à l'extérieur de la saillie dudit second siège. Enfin, on monte ledit second bourrelet sur ledit second siège.

Pour mettre en oeuvre cette étape d'extraction, on peut procéder d'une manière manuelle au moyen d'outils du type levier, de sorte à extraire progressivement ledit second bourrelet de la gorge de montage.

On peut également procéder d'une manière automatisée, comme décrit dans le document de brevet européen EP-A-1 008 467, dans un premier temps, en créant au moyen d'un doigt de poussée un espace local entre ledit second bourrelet et ledit rebord axialement interne dudit second siège puis, dans un second temps, en insérant dans cet espace local un crochet de préhension de manière qu'il occupe une position d'appui sur la face interne dudit second bourrelet puis, dans un troisième temps, en faisant pivoter le crochet de préhension dans ladite position d'appui de sorte à amener ledit second bourrelet dans une position d'extraction locale, radialement et axialement à l'extérieur dudit second siège puis, dans un quatrième temps, à extraire ledit second bourrelet sur toute la circonférence de l'enveloppe.

Comme on peut le voir à la Fig. 2 de ce document, ce second temps consiste à faire pivoter le crochet de préhension sur un premier axe de pivotement situé radialement à l'extérieur de ladite gorge, de sorte que le crochet occupe ladite position d'appui, et ledit troisième temps consiste à commander le pivotement du crochet dans ladite position d'appui sous la commande d'un moyen de commande auquel est couplé le crochet, de telle manière que ce dernier pivote autour d'un second axe de pivotement fixe qui est situé radialement à l'intérieur de ladite gorge.

Ce troisième temps est mis en oeuvre au moyen d'une biellette distincte dudit crochet qui est articulée, d'une part, sur ce crochet via le premier axe de pivotement et, d'autre part, sur un support fixe via le second axe de pivotement, cette biellette étant prévue pour pivoter sur ce second axe via ledit moyen de commande.

Le document de brevet européen EP-A-1 048 496 décrit un procédé et un dispositif de montage dans lequel le premier bourrelet et l'appui de soutien sont simultanément enfilés sur la jante par application progressive d'un effort axial sur ledit premier bourrelet, lui-même étant en appui contre la face adjacente de l'appui. L'outil d'application de l'effort axial est un galet libre en rotation et cette mise en place s'effectue pendant une rotation de la jante qui entraîne également en rotation l'enveloppe et l'appui.

Ce procédé est surtout adapté dans le cas d'un appui qui, dans une position où il est enfilé sur la portée de la jante, est en contact avec le premier bourrelet ou est très proche de celui-ci alors qu'il l'est moins dans le cas d'un appui « allégé » qui, à l'état monté, est éloigné de la face intérieure de chaque bourrelet d'une distance notable, de l'ordre d'une dizaine de centimètres par exemple. Lors du montage sur la jante d'une enveloppe pourvue d'un tel appui, l'expérience montre que ledit premier bourrelet ne suit pas vraiment le mouvement de l'appui pendant la mise en place dudit appui sur la portée de la jante.

Un but de la présente invention est de proposer un procédé de montage sur une jante de roue, d'une part, d'une enveloppe de pneumatique comportant un premier et un second bourrelets respectivement destinés à être montés sur un premier et un second sièges de ladite jante et, d'autre part, d'un appui de sécurité destiné à être monté dans l'espace interne à ladite enveloppe sur une portée de ladite jante en vue de soutenir la bande de roulement de ladite enveloppe en cas de chute de pression à l'intérieur de celle-ci, lesdits premier et second sièges étant chacun prolongés axialement à l'extérieur par une saillie, l'extrémité axialement intérieure de l'un au moins desdits sièges décrivant un cercle de diamètre supérieur à celui du cercle décrit par l'extrémité axialement extérieure du même siège, ledit premier siège étant relié axialement à l'intérieur à ladite portée, laquelle est reliée audit second siège par une gorge de montage, ledit procédé comprenant d'une manière connue les étapes suivantes :
(a) on amène sur ladite jante ladite enveloppe pourvue dudit appui dans son espace interne, en présentant ledit second bourrelet du côté dudit premier siège, puis
(b) on fait glisser ledit second bourrelet axialement sur ladite portée de manière à l'introduire dans ladite gorge et à mettre partiellement en place ledit appui sur ladite portée, ledit premier bourrelet se trouvant alors axialement à l'extérieur dudit premier siège, puis
(c) on enfile totalement ledit appui sur ladite portée, puis
(d) on monte ledit premier bourrelet sur ledit premier siège, puis
(e) on extrait ledit second bourrelet de ladite gorge de manière à l'amener axialement à l'extérieur de ladite saillie dudit second siège, puis
(f) on monte ledit second bourrelet sur ledit second siège,
qui optimise notamment l'efficacité de cette étape e) d'extraction en permettant un montage automatisé et à l'échelle industrielle d'enveloppes pourvues d'appuis de sécurité pour tout type d'appui, quelles que soient ses dimensions et son mode de montage sur la jante.

A cet effet, le procédé de montage selon l'invention est tel que, avant de mettre en oeuvre ladite étape (b), on met en place au fond de ladite gorge un moyen d'extraction dudit second bourrelet et que, pour mettre en oeuvre ladite étape (e), on guide ledit second bourrelet axialement vers l'extérieur de ladite gorge et dudit second siège en faisant pivoter ledit moyen d'extraction autour d'un axe situé radialement à l'intérieur de ladite jante.

On notera que cette mise en place initiale du moyen d'extraction au fond de ladite gorge supprime la nécessité de créer ultérieurement un espace local entre le second bourrelet et le rebord axialement interne du second siège, (par exemple au moyen du doigt de poussée dudit document EP-A-1 008 467), pour pouvoir insérer un crochet d'extraction dudit second bourrelet.

On notera également que cette mise en place initiale permet l'extraction de ce second bourrelet sans l'endommager en aucune manière.

Selon une autre caractéristique de l'invention, on entraîne solidairement en rotation ladite jante, ladite enveloppe et ledit appui autour de l'axe de révolution de ladite jante pour mettre en oeuvre ladite étape (e) sur la circonférence de ladite jante.

Selon une autre caractéristique de l'invention,
(i) avant de mettre en oeuvre ladite étape (c), on écarte ledit premier bourrelet radialement vers l'extérieur dudit premier siège en même temps que l'on amène un moyen de poussée dudit appui radialement à la hauteur de ce dernier et en ce que,
(ii) pour mettre en oeuvre ladite étape (c), on déplace axialement vers l'intérieur ledit moyen de poussée de manière qu'il pousse progressivement ledit appui sur ladite portée en direction dudit second siège, en même temps que l'on maintient ledit premier bourrelet axialement et radialement à l'extérieur dudit premier siège en entraînant solidairement en rotation ladite jante, ladite enveloppe et ledit appui autour de l'axe de révolution de ladite jante.

On notera que l'opération (i) permet de maîtriser d'une manière satisfaisante les conditions de mise en place de l'appui.

On notera également que le maintien à l'opération (ii) dudit premier bourrelet permet d'éviter tout contact entre ce dernier et le sommet de l'appui.

Selon une autre caractéristique de l'invention, avant l'opération (i), on exerce localement une force axiale sur un flanc de ladite enveloppe prolongeant ledit second bourrelet, de sorte à amener ledit premier bourrelet axialement vers l'extérieur dudit appui et à créer un espace local entre ledit premier bourrelet et le bord latéral adjacent dudit appui qui soit suffisant pour pouvoir écarter ledit premier bourrelet radialement vers l'extérieur.

Selon un mode préférentiel de réalisation de l'invention, ledit procédé de montage consiste à maintenir dans la direction de la pesanteur l'axe de révolution de ladite jante pourvue dudit appui et de ladite enveloppe, pour mettre en oeuvre lesdites étapes (a) à (f).

Un autre but de la présente invention est de proposer une unité pour la mise en oeuvre du procédé de montage précité, ladite unité comportant un moyen de réception destiné à recevoir ladite roue pourvue dudit appui et de ladite enveloppe et à l'entraîner en rotation autour de son axe de révolution, et un moyen d'extraction qui est adapté pour extraire ledit second bourrelet de ladite gorge de montage au moyen d'un crochet et qui comporte une biellette articulée sur un axe fixe de pivotement et destinée à faire pivoter ledit crochet autour dudit axe fixe par l'intermédiaire d'un moyen de commande de ladite biellette,
qui permette également un montage en série, automatisé et efficace à l'échelle industrielle d'enveloppes pourvues d'appuis de sécurité pour tout type d'appui.

A cet effet, une unité selon l'invention est telle que ledit crochet est formé sur ladite biellette.

On notera que cette structure monobloc pour le crochet et la biellette facilite l'opération d'extraction dudit second bourrelet.

Selon un exemple préférentiel de réalisation de l'invention, ledit moyen de commande comporte un vérin dont la tige est articulée sur ladite biellette de telle sorte qu'une variation de course dudit vérin fasse pivoter ledit crochet autour dudit axe fixe de pivotement.

Selon une autre caractéristique de l'invention, ledit crochet présente une courbure adaptée pour épouser le contour du fond de ladite gorge de montage.

Selon une autre caractéristique de l'invention, une encoche en forme de « U », adaptée pour épouser pratiquement le contour dudit second siège, est formée dans ladite biellette entre ledit crochet et ledit axe fixe de pivotement.

Selon une autre caractéristique de l'invention, ladite unité de montage comporte des moyens de positionnement dudit moyen d'extraction et dudit moyen de commande dans les directions axiale et radiale par rapport à ladite jante.

Selon une autre caractéristique de l'invention, ladite unité de montage comporte un doigt de préhension dont l'extrémité libre présente une courbure adaptée pour saisir ledit premier bourrelet, un moyen de poussée dudit appui étant monté sur ladite extrémité du côté dudit doigt qui est opposé à ladite courbure, ledit doigt étant relié à des moyens de commande pour commander son déplacement, d'une part, dans la direction radiale par rapport à ladite jante de sorte à pouvoir écarter radialement vers l'extérieur ledit premier bourrelet et, d'autre part, dans la direction axiale par rapport à ladite jante de sorte que ledit moyen de poussée pousse ledit appui sur ladite jante et que le côté dudit doigt en regard de ladite courbure forme une rampe de glissement pour ledit premier bourrelet lors de cette poussée.

Selon un exemple de réalisation de l'invention, ledit doigt de préhension est pourvu, du même côté sur lequel est monté ledit moyen de poussée et à l'opposé de ladite extrémité, d'un galet de montage destiné à monter ledit premier bourrelet sur ledit premier siège, ledit doigt de préhension étant monté pivotant de sorte que, en alternance, ledit moyen de poussée et ledit galet de montage puissent être positionnés axialement d'une manière adjacente audit appui et audit premier bourrelet, respectivement, par un pivotement de 180° dudit doigt de préhension.

Selon un mode préférentiel de réalisation de l'invention, ledit moyen de réception est prévu pour immobiliser ledit axe de révolution de ladite roue dans la direction de la pesanteur.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels :
La Fig.1 est une vue en section méridienne d'une jante de roue connue qui est utilisable pour mettre en oeuvre le procédé de montage selon l'invention,
La Fig. 2 est une vue schématique et partielle en élévation d'une unité de montage selon l'invention,
La Fig. 3 est une vue schématique de moyens de montage de l'unité de la Fig. 2 selon un premier exemple de réalisation de l'invention, ces moyens étant pourvus d'une enveloppe de pneumatique et d'un premier exemple d'appui qui sont représentés en cours de montage sur la jante de la Fig. 1,
La Fig. 4 est une vue schématique des moyens de montage de la Fig. 3 dans un premier temps d'une première étape du procédé de montage selon l'invention,
La Fig. 5 est une vue schématique des moyens de montage de la Fig. 3 dans un second temps de ladite première étape,
La Fig. 6 est une vue schématique des moyens de montage de la Fig. 3 dans un premier temps d'une seconde étape du procédé de montage selon l'invention,
La Fig. 7 est une vue schématique des moyens de montage de la Fig. 3 dans un second temps de ladite seconde étape,
La Fig. 8 est une vue schématique des moyens de montage de la Fig. 3 dans un troisième temps de ladite seconde étape,
La Fig. 9 est une vue schématique des moyens de montage de la Fig. 3 dans un quatrième temps de ladite seconde étape,
La Fig. 10 est une vue schématique des moyens de montage de la Fig. 3 dans un premier temps d'une troisième étape du procédé de montage selon l'invention, avec un médaillon illustrant un aspect de ce premier temps selon une vue de dessus desdits moyens de montage,
La Fig. 11 est une vue schématique des moyens de montage de la Fig. 3 dans un second temps de ladite troisième étape,
La Fig. 12 est une vue schématique des moyens de montage de la Fig. 3 dans un troisième temps de ladite troisième étape,
La Fig. 13 est une vue schématique des moyens de montage de la Fig. 3 dans un premier temps d'une quatrième étape du procédé de montage selon l'invention,
La Fig. 14 est une vue schématique des moyens de montage de la Fig. 3 dans un second temps de ladite quatrième étape illustrant l'obtention d'un ensemble monté,
La Fig. 15 est une vue schématique d'une partie de l'unité de montage de la Fig. 2 qui est destinée à l'extraction de l'ensemble monté de la Fig. 14 desdits moyens de montage, et
Les Figs. 16 et 17 sont des vues schématiques de moyens de montage de l'unité de la Fig. 2 selon un second exemple de réalisation de l'invention, ces moyens étant pourvus d'une enveloppe de pneumatique et d'un second exemple d'appui qui sont représentés selon deux temps successifs de montage sur une jante distincte de celle de la Fig. 1, venant en remplacement de ladite seconde étape illustrée aux Figs. 6 à 9 pour ledit premier exemple selon l'invention.

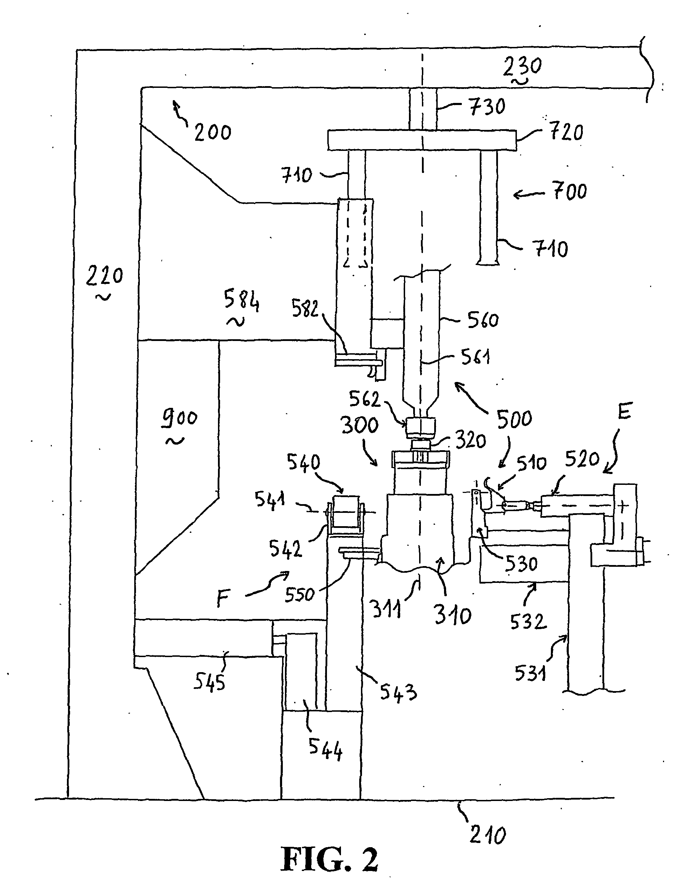

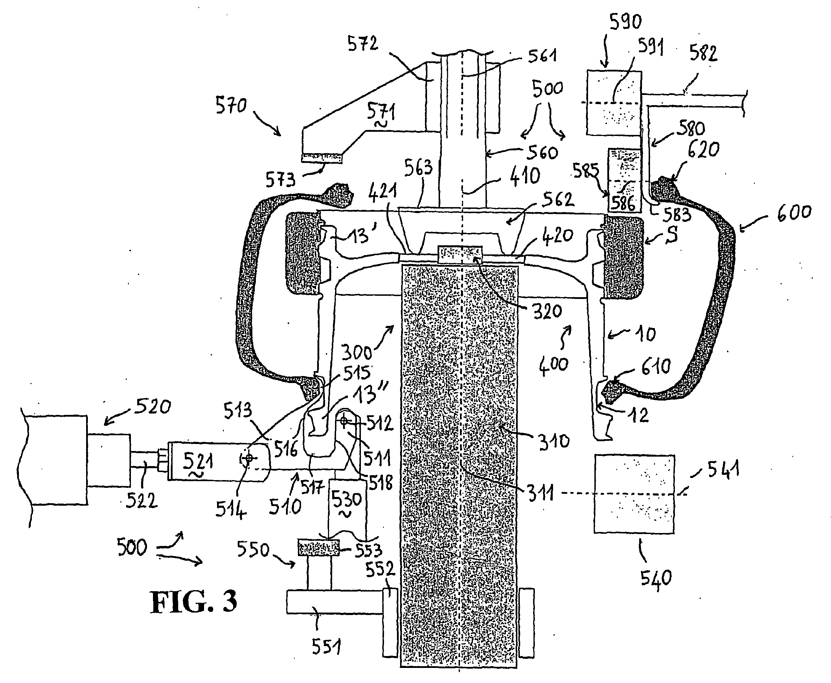

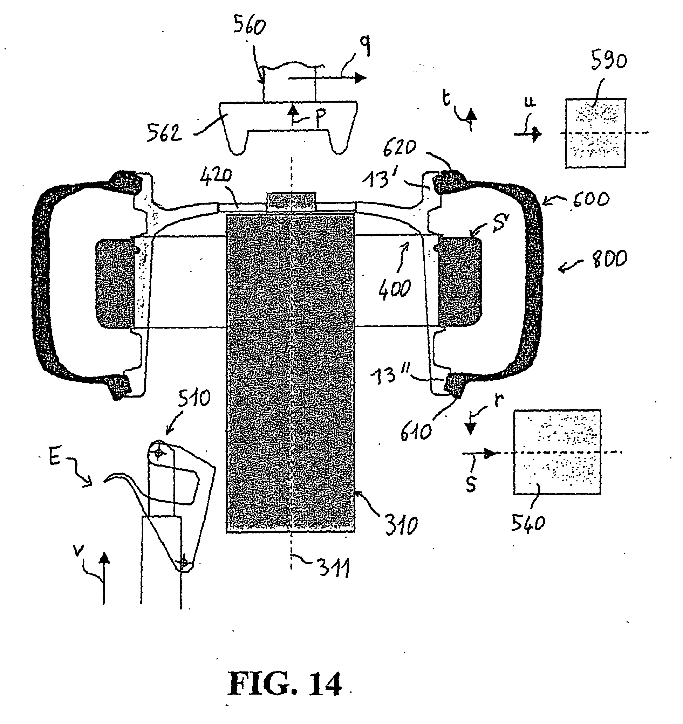

La Fig. 2 illustre de manière schématique les éléments constitutifs essentiels d'une unité de montage selon l'invention. Cette unité comporte essentiellement :
- un bâti 200 en forme de portique,
- un moyen de réception rotatif 300 monté sur le socle 210 du bâti 200 et destiné à recevoir une roue 400 comportant la jante 10 de la Fig. 1 (cette roue 400 est visible à la Fig. 3) de manière que l'axe de révolution 410 de la roue 400 soit bloqué dans la direction verticale et à entraîner cette roue 400 en rotation autour dudit axe 410,
- des moyens de montage 500 d'une enveloppe de pneumatique 600 et d'un appui de soutien S sur la roue 400,
- des moyens de retrait 700 pour retirer un ensemble monté 800 (lequel est visible à la Fig. 14) de ces moyens de montage 500, et
- un pupitre de commande 900 prévu pour commander l'ensemble des mouvements du moyen de réception 300, des moyens de montage 500 et des moyens de retrait 700.

Le moyen de réception rotatif 300 comporte un arbre 310 d'axe 311 perpendiculaire au socle 210, à l'extrémité duquel est couplé un moyeu 320 qui est destiné à coopérer avec le disque 420 de la roue 400 (voir Fig. 3) et à être entraîné en rotation autour de son axe 311 par ledit arbre 310.

Comme on peut le voir à la Fig. 3, le moyen de réception 300 et les moyens de montage 500 sont agencés de telle manière dans l'unité de montage selon l'invention que la face extérieure 421 du disque de roue 420, qui est destinée à être monté du côté extérieur du véhicule équipé de cette roue 400, soit tournée vers le haut de ladite unité. Il en résulte que ledit premier siège de jante 13', qui est également destiné à être monté dudit côté extérieur, est destiné à être positionné au-dessus dudit second siège de jante 13".

Comme cela est visible aux Figs. 2 et 3, les moyens de montage 500 comportent essentiellement, en dessous du moyeu 320 dans la direction axiale de l'axe 311 de l'arbre 310, les éléments suivants.

Est notamment visible à la Fig. 3 un moyen d'extraction 510 qui est adapté pour extraire de la gorge de montage 12 de la jante 10, sous la commande d'un vérin 520 par exemple de type pneumatique, le second bourrelet 610 de l'enveloppe 600 destiné à être monté sur le second siège de jante 13".

Selon l'invention, la Fig. 3 montre que ce moyen d'extraction 510 est constitué d'une biellette qui est montée pivotante, d'une part, en l'une de ses extrémités 511 via un pivot 512 qui est monté fixe sur un support 530 et qui est destiné à être positionné radialement à l'intérieur du second siège de jante 13" et, d'autre part, en son autre extrémité 513 via un pivot 514 qui est monté mobile par rapport audit support 530 en étant monté sur une patte 521 prolongeant coaxialement la tige 522 du vérin 520, de manière que ce pivot 514 puisse décrire un arc de cercle autour du pivot 512 sous l'action du vérin 520.

La biellette 510 comporte un crochet 515 qui s'étend entre lesdites extrémités 511 et 513 et qui forme sensiblement un triangle rectangle avec ladite extrémité « mobile » 513 et un premier bord 516 d'une encoche 517 en forme de « U » qui relie ledit crochet 515 à ladite extrémité « fixe » 511. Le second bord 518 de l'encoche 517, parallèle au précédent, contient en son sommet l'extrémité « fixe » 511 de la biellette 510.

Cette encoche 517 est adaptée pour épouser pratiquement le contour du second siège de jante 13", de sorte à permettre le pivotement de la biellette 510 sur le pivot « fixe » 512 sans que le crochet 515 ni les bords 516, 518 de l'encoche 517 ne viennent au contact du second siège 13".

Cette encoche 517 est telle que les deux extrémités 511 et 513 de la biellette 510 sont reliées entre elles par un « L » que forme pratiquement une partie de ladite biellette 510.

On notera que le crochet 515 prolonge initialement le premier bord 516 de l'encoche 517 en direction du second bord 518 d'une manière oblique en faisant un angle aigu, puis ce crochet 515 s'incurve légèrement selon une courbure dirigée vers ledit premier bord 516, de telle sorte que le crochet 515 permette d'épouser le contour du fond de la gorge de montage 12 de la jante 10 pour extraire le second bourrelet 610 de ladite gorge 12.

Comme on peut le voir à la Fig. 2, le bloc d'extraction E comportant le vérin 520, le moyen d'extraction 510 et le support 530 est relié à deux moyens de positionnement 531 et 532, chacun étant par exemple de type vis-écrou entraîné par un moteur électrique. Un moyen de positionnement axial 531 est destiné à ajuster la position en hauteur dudit bloc d'extraction (i.e. dans la direction axiale de l'axe 311), alors qu'un moyen de positionnement radial 532 est destiné à ajuster la position du bloc d'extraction dans la direction radiale dudit axe 311 (i.e. directions radiale de la roue 400).

Est également visible à la Fig. 3 notamment un galet inférieur de montage 540 qui est monté libre en rotation sur un axe 541 perpendiculaire audit axe 311 par l'intermédiaire de pattes 542 prolongeant un support vertical 543, de l'autre côté du moyen d'extraction 510 par rapport audit axe 311, ledit galet 540 étant destiné à monter ledit second bourrelet 610 sur ledit second siège 13". A l'instar dudit bloc d'extraction E, le bloc F comportant le support 543 et le galet 540 est relié à deux moyens de positionnement 544 et 545 pour commander sa position dans les directions axiale et radiale précitées.

Est également visible à la Fig. 3 un patin inférieur 550, monté sur un bras 551 qui est relié audit arbre 310 dans la direction radiale de celui-ci par l'intermédiaire d'un roulement 552, de telle manière que ce patin 550 puisse pivoter autour de l'arbre 310 du fait de la rotation de ce dernier sous la commande de moyens de commande (non représentés, par exemple de type clavette), la semelle 553 de ce patin 550 étant parallèle à l'axe 541 dudit galet 540 et étant destinée à maintenir ledit second bourrelet 610 en position de montage sur ledit second siège 13", lors du pivotement du patin 550.

Comme cela est visible aux Figs. 2 et 3, les moyens de montage 500 comportent en outre, au-dessus du moyeu 320 dans la direction axiale de l'axe 311, les éléments suivants.

Est notamment visible à la Fig. 3 un organe de maintien complémentaire 560 qui est monté solidaire d'un montant 220 du bâti 200 de manière que l'axe 561 de l'organe de maintien 560 soit confondu avec l'axe 311 de l'arbre 310. Cet organe de maintien 560 est pourvu à son extrémité libre d'un embout de poussée 562, par exemple en forme de disque, qui est adapté pour maintenir la roue 400 en place sur le moyeu 320 lors de la rotation de ce dernier, des roulements 563 étant prévus entre ledit embout 562 et ledit organe de maintien 560.

Est également visible à la Fig. 3 un patin supérieur 570 monté à extrémité d'un bras 571 qui est relié à l'organe de maintien 560 dans la direction radiale de celui-ci par l'intermédiaire d'un roulement 572, de telle manière que ce patin 570 puisse pivoter autour de l'organe de maintien 560 indépendamment de ce dernier sous la commande de moyens de commande (non représentés), la semelle 573 de ce patin 570 étant parallèle à celle dudit patin inférieur 550 et étant destinée à maintenir le premier bourrelet 620 de l'enveloppe 600 en position de montage sur ledit premier siège 13', lors du pivotement du patin 570.

Est également visible à la Fig. 3 un doigt de préhension 580 formé par une tige qui s'étend dans la direction verticale de l'axe 561 de l'organe de maintien 560 et qui est également montée solidaire du montant 220 du bâti 200 via un bras de liaison horizontal 582 qui est prévu pour se déplacer radialement et pour pouvoir pivoter de 180° autour de son axe sous la commande de moyens de commande (non représentés). L'extrémité libre 583 de ce doigt 580 présente une courbure qui est destinée à être orientée vers l'extérieur de la jante 10 et qui est adaptée pour saisir et pousser localement ledit premier bourrelet 620 vers l'extérieur dans la direction radiale de l'enveloppe 600, sous la commande de moyens de commande 584 (voir Fig. 2), lorsque ladite extrémité 583 occupe une position basse déterminée par le pivotement dudit bras de liaison 582.

Un galet de poussée 585 est monté libre en rotation à l'extrémité 583 du doigt 580 via un axe de rotation 586 horizontal qui est parallèle audit axe 541 dudit galet inférieur 540, sur la face du doigt 580 qui est opposée à celle orientée vers ladite courbure, de manière que la surface cylindrique de ce galet 585 fasse saillie axialement au-delà de ladite extrémité 583 (i.e. verticalement et vers le bas). Ce galet 585 est adapté pour pousser à l'intérieur de l'enveloppe 600 l'appui S dans la direction axiale de celle-ci, sous la commande desdits moyens de commande 584, également dans la position basse précitée de ladite extrémité 583.

Sur ce même doigt de préhension 580 est par ailleurs monté un galet supérieur de montage 590 (seulement visible à la Fig. 3), dont l'axe de rotation 591 est parallèle à celui du galet de poussée 585 et qui est également monté libre en rotation sur la face du doigt 580 opposée à celle orientée vers ladite courbure et à l'opposé de ladite extrémité 583. Le galet 590 présente une surface cylindrique de hauteur (i.e. dans la direction de l'axe de rotation 591) supérieure à celle du galet de poussée 585, de telle sorte que ce galet 590 soit adapté pour monter ledit premier bourrelet 620 sur ledit premier siège 13' lorsque ladite extrémité 583 occupe une position haute déterminée par un pivotement de 180° dudit bras de liaison 582.

Le moyen de retrait 700 d'un ensemble monté 800 des moyens de montage 500 (voir la Fig. 2) est essentiellement constitué de bras verticaux de préhension 710 dudit ensemble 800 qui sont montés d'une manière mobile l'un par rapport à l'autre sur un plateau 720 monté coulissant sur une traverse horizontale 230 que comporte le bâti 200, sous la commande de moyens de coulissement vertical et horizontal 730.

Le pupitre de commande 900 est connecté électriquement à l'ensemble des moyens de réception, de montage et de retrait 300, 500, 700 précités, et l'électronique de commande dont il est pourvu ne fera pas l'objet d'une description détaillée dans la présente demande.

Une unité de montage selon l'invention fonctionne de la manière suivante.

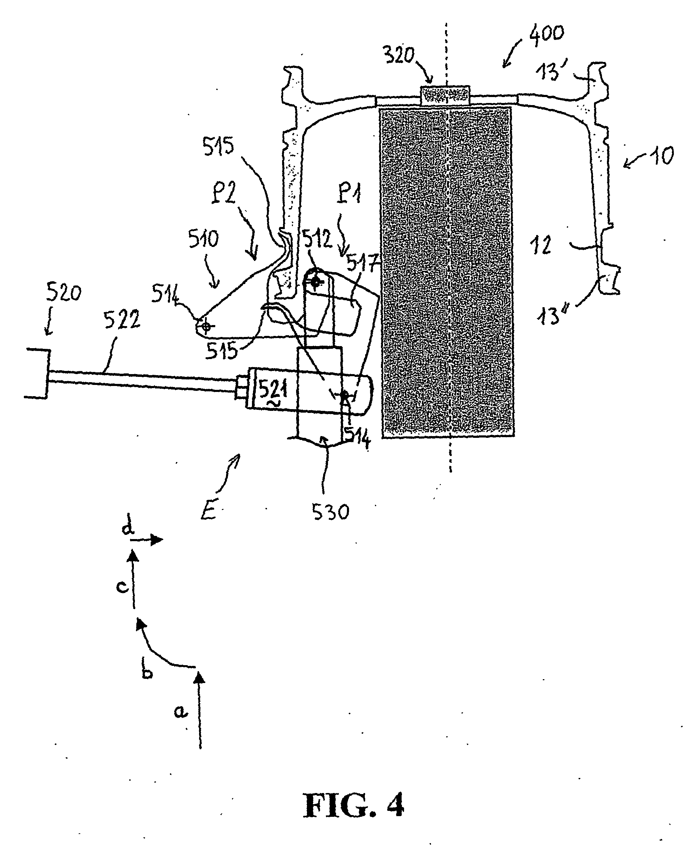

Une première étape du procédé de montage selon l'invention est illustrée aux Figs. 4 et 5.

Comme cela est visible à la Fig. 4, un opérateur met d'abord en place la roue 400 sur le moyeu 320 dans une position de verrouillage.

Il commande ensuite d'une manière automatique la totalité des opérations détaillées ci-après en actionnant initialement l'électronique de commande du pupitre 900.

Cette électronique de commande déplace d'abord le moyen d'extraction 510 de telle manière qu'il passe essentiellement d'une position P1, dans laquelle le crochet 515 de la biellette 510 est située axialement à l'extérieur (i.e. en contrebas) du second siège de jante 13", à une position P2, dans laquelle le crochet 515 est disposé sur le fond de la gorge 12 de la jante 10.

Antérieurement à cette position P1, l'électronique de commande a actionné le moyen de positionnement axial 531 pour que le bloc d'extraction E (vérin 520, moyen d'extraction 510 et support 530) soit déplacé en translation verticale et ascendante dans le sens de la flèche a pour se trouver à une hauteur appropriée correspondant à la position P1. Dans l'exemple de la Fig. 4, cette position P1 est telle que le pivot fixe 512 du support 530 est situé radialement à l'intérieur du second siège de jante 13" et en regard de ce dernier.

L'électronique de commande fait passer la biellette 510 de la position P1 à la position P2 en actionnant dans un premier temps le vérin 520 pour que sa course soit réduite dans une mesure telle qu'elle fasse décrire audit pivot « mobile » 514, via la patte 521, un arc de cercle autour dudit pivot « fixe » 512 (voir la flèche b) de manière que le crochet 515 de la biellette 510 décrive également un arc de cercle axialement vers l'intérieur du second siège 13" et radialement vers l'extérieur de ce dernier.

Lorsque le crochet 515 se trouve radialement à l'extérieur du second siège 13", l'électronique de commande procède dans un deuxième temps, si besoin est, à un léger ajustement de la position axiale du bloc d'extraction E en actionnant le moyen de positionnement axial 531 (translation verticale ascendante de quelques mm, par exemple, voir la flèche c) et, par conséquent du crochet 515, pour que celui-ci vienne en regard du fond de la gorge de montage 12 de la jante 10 lors de la poursuite du pivotement de là biellette 510 autour du pivot 512.

Puis, dans un troisième temps, l'électronique de commande procède à un léger ajustement de la position radiale du bloc d'extraction E en actionnant le moyen de positionnement radial 532, pour disposer le crochet 515 sur le fond de la gorge de montage 12 (voir la flèche d illustrant cette translation radiale vers l'intérieur de la jante 10).

On notera que l'emplacement du pivot « fixe » 512 dans la position P1 et la forme de l'encoche 517 autorisent le pivotement la biellette 510 sans que ce pivotement ne soit entravé par le second siège 13"

Comme cela est visible à la Fig. 5, l'électronique de commande amène ensuite l'enveloppe 600 pourvue à l'intérieur de l'appui S sur la jante 10 (voir la flèche ε) de telle manière que le second bourrelet 610 soit logé dans la gorge de montage 12, radialement sur le crochet 515, et que le premier bourrelet 620 occupe une position axialement à l'extérieur du premier siège 13', tout comme un bord latéral S1 de l'appui S. On voit que cet appui S est alors monté à la fois sur lesdites zones 111 et 112 de la portée 11 de la jante 10.

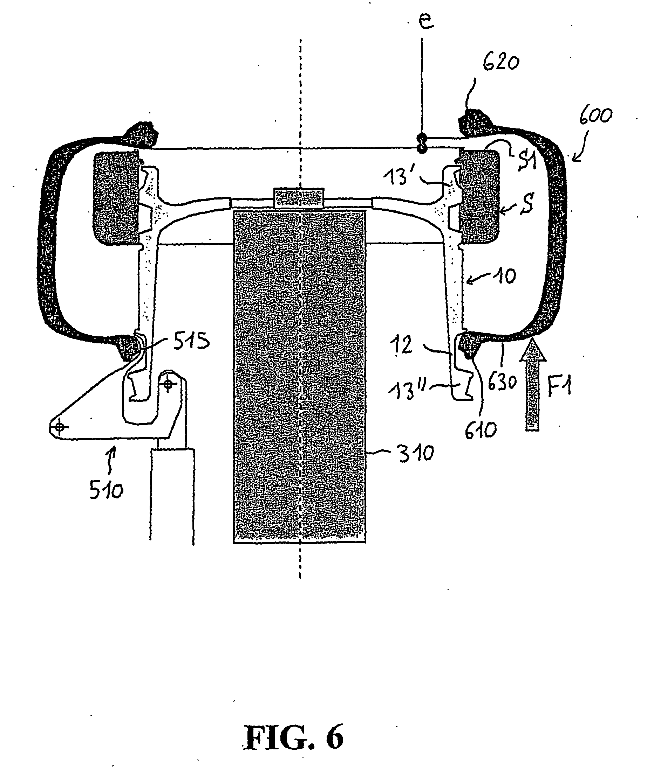

Une seconde étape du procédé de montage selon l'invention est illustrée aux Figs. 6 à 9.

Comme cela est visible à la Fig. 6, l'électronique de commande procède ensuite à l'exercice d'une force axiale localement (symbolisée à la Fig. 6 par la flèche F1) sur le flanc 630 de l'enveloppe 600 prolongeant le second bourrelet 610, de sorte à amener axialement vers l'extérieur de l'appui S le premier bourrelet 620 et à créer un espace local e (d'au moins 10 mm, par exemple) entre ledit bourrelet 620 et le bord latéral adjacent S1 de l'appui S qui soit suffisant pour y insérer le doigt de préhension 580.

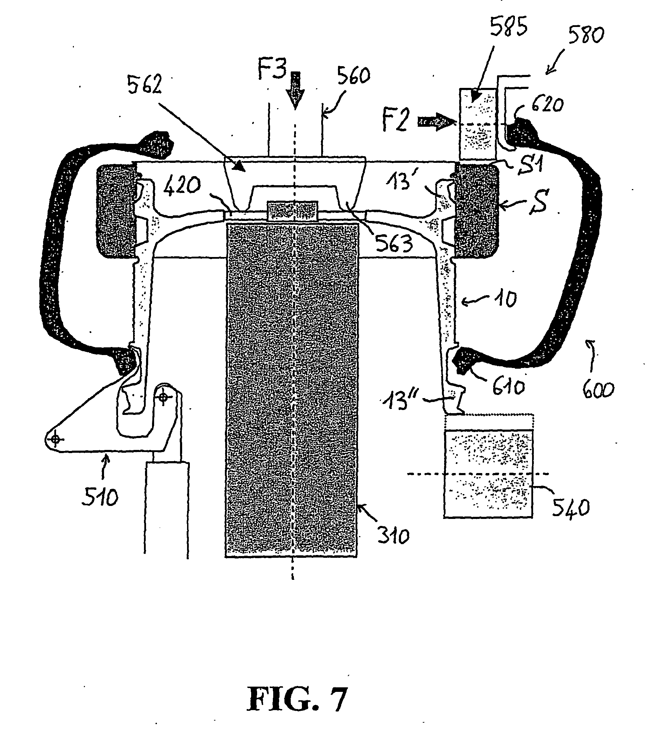

Comme cela est visible à la Fig. 7, l'électronique de commande procède ensuite, d'une part, à l'insertion du doigt 580 dans ledit espace local e et à l'écartement radialement vers l'extérieur du premier bourrelet 620 via l'exercice local d'une force radiale (symbolisée par la flèche F2) et, d'autre part, à l'application de l'embout de poussée 562 de l'organe de maintien 560 sur le disque de roue 420 (application symbolisée par la force axiale F3). On voit sur cette Fig. 7 que la force radiale F2 a pour effet d'amener la surface cylindrique du galet de poussée 585 en position radialement centrée sur le bord latéral adjacent S1 de l'appui S.

L'électronique de commande procède par ailleurs au rapprochement du galet inférieur de montage 540 via lesdits moyens de positionnement 544, 545, pour ajuster sa position dans les directions axiale et radiale au plus près du second siège de jante 13".

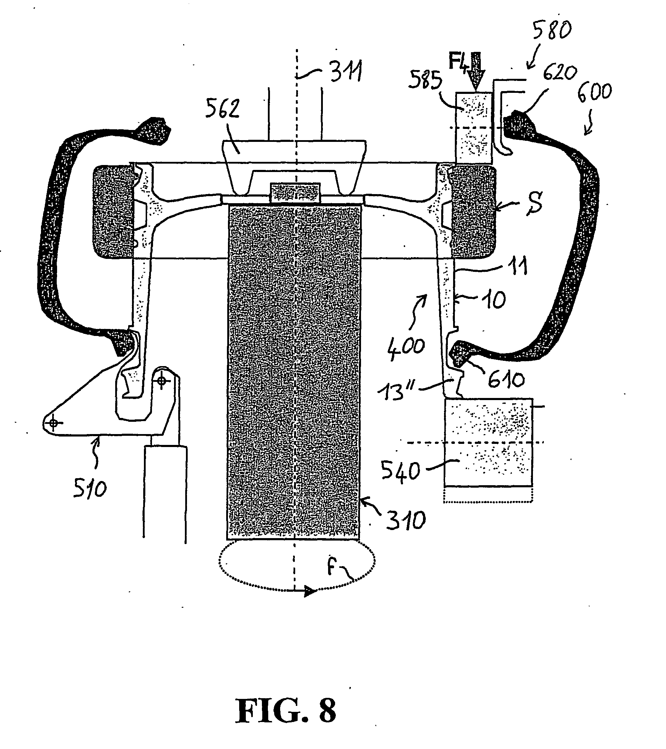

Comme cela est visible à la Fig. 8, l'électronique de commande procède ensuite à la mise en rotation de l'arbre 310 (voir flèche circulaire f), ce qui a pour effet d'entraîner l'ensemble (roue 400, appui S, enveloppe 600) solidairement en rotation autour de l'axe 311 et, d'une manière concomitante, cette électronique commande le déplacement du doigt de préhension 580 dans la direction axiale et vers l'intérieur de l'enveloppe 600 de manière que le galet 585 pousse progressivement l'appui S sur la portée 11 de la jante 10 en direction du second siège 13" (cette poussée est symbolisée par la force verticale descendante F4). On voit à la Fig. 8 que cet entraînement en rotation de l'ensemble (roue 400, enveloppe 600, appui S) par rapport au doigt de préhension 580 permet de déplacer axialement vers l'intérieur l'appui S sur toute la circonférence de la portée 11 de la jante 10.

L'électronique de commande poursuit par ailleurs le rapprochement du galet inférieur de montage 540 pour l'amener immédiatement sous le second siège de jante 13".

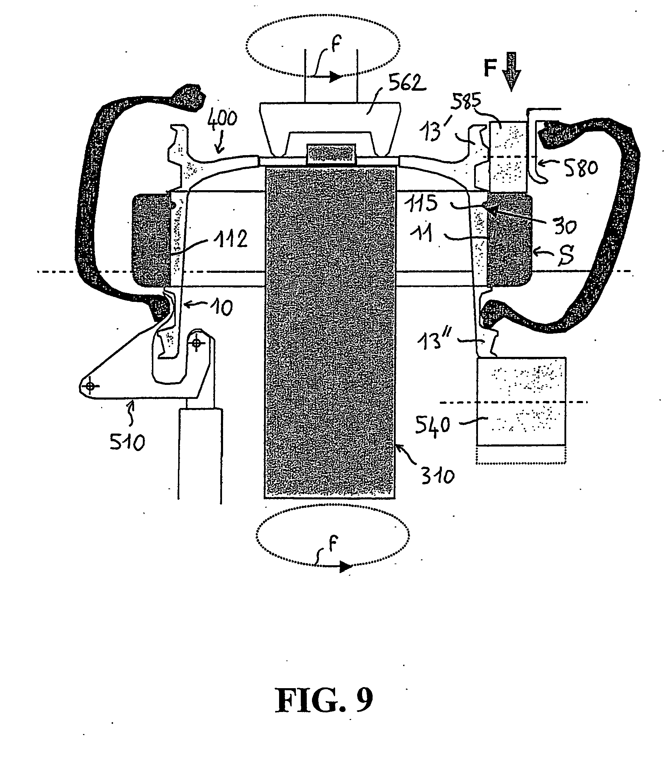

Comme cela est visible à la Fig. 9, l'électronique de commande continue de pousser axialement vers l'intérieur l'appui S sur la portée 11 via le galet 585 tout en maintenant la rotation de l'ensemble (roue 400, appui S, enveloppe 600) et en maintenant le galet inférieur 540 sous le second siège 13 ", jusqu'à ce que les protubérances circonférentielles 30 de l'appui S soient logées dans la rainure circonférentielle 115 de ladite portée 11. On voit à la Fig. 9 que l'appui S est ainsi immobilisé sur la portée de jante 11, et que la totalité de la face radialement inférieure dudit appui S est alors montée sur la zone 112 de ladite portée 11.

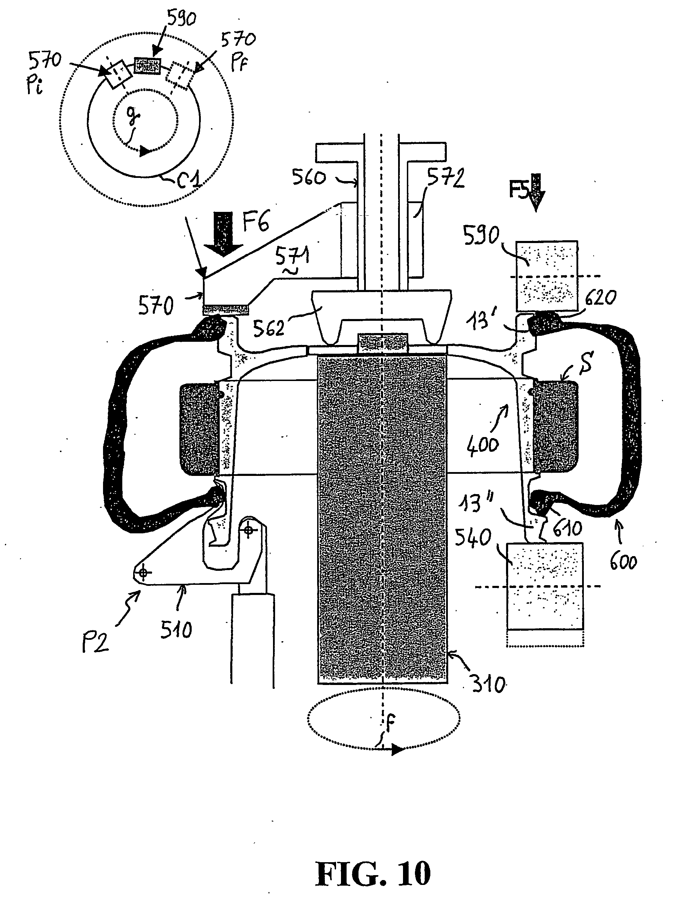

Une troisième étape du procédé de montage de l'invention est illustrée aux Figs. 10 à 13.

Comme cela est visible à la Fig. 10, l'électronique de commande procède au retrait axialement vers l'extérieur du doigt de préhension 580 (non représenté), ce qui a pour effet de positionner le premier bourrelet 620 axialement à l'extérieur du premier siège de jante 13', ce retrait étant effectué après avoir momentanément interrompu la rotation de l'ensemble (roue 400, appui S, enveloppe 600). Cette électronique commande ensuite un pivotement de 180° du doigt 580 autour du bras de liaison 582, ce qui a pour effet d'amener le galet supérieur de montage 590 axialement au contact du premier bourrelet 620 sur le premier siège 13'.

Après avoir rétabli la mise en rotation de l'ensemble (roue 400, appui S, enveloppe 600), l'électronique de commande procède ensuite au déplacement axialement vers l'intérieur du galet 590 de manière que ce dernier pousse le premier bourrelet 620 pour le monter sur le premier siège 13', comme illustré à la Fig. 10 (cette poussée est symbolisée par la flèche F5), en même temps que cette électronique applique ledit patin supérieur 570 sur ce premier bourrelet 620 via ledit bras 571 (voir flèche F6) tout en faisant pivoter ce patin 570 autour de l'organe de maintien 560 et au contact de ce bourrelet 620, sur un arc de cercle C1 représenté sur la vue en médaillon incluse dans la Fig. 10.

On voit sur ce médaillon que cet arc de cercle C1 est par exemple décrit à partir d'une position initiale Pi où le patin 570 est immédiatement adjacent au galet supérieur de montage 590 d'un côté de celui-ci, dans un sens de rotation (voir flèche circulaire g) où le patin 570 s'éloigne du galet 590 et jusqu'à une position finale Pf où ledit patin 570 est immédiatement adjacent audit galet 590 de l'autre côté de celui-ci. Le trajet suivi par le patin 570 est donc symétrique par rapport au galet 590 dans cet exemple de réalisation.

On notera que le pivotement de ce patin 570 au contact du premier bourrelet 620 permet de maintenir toute la circonférence de ce dernier dans la position de montage sur le siège 13' qui est obtenue via l'action du galet de montage 590.

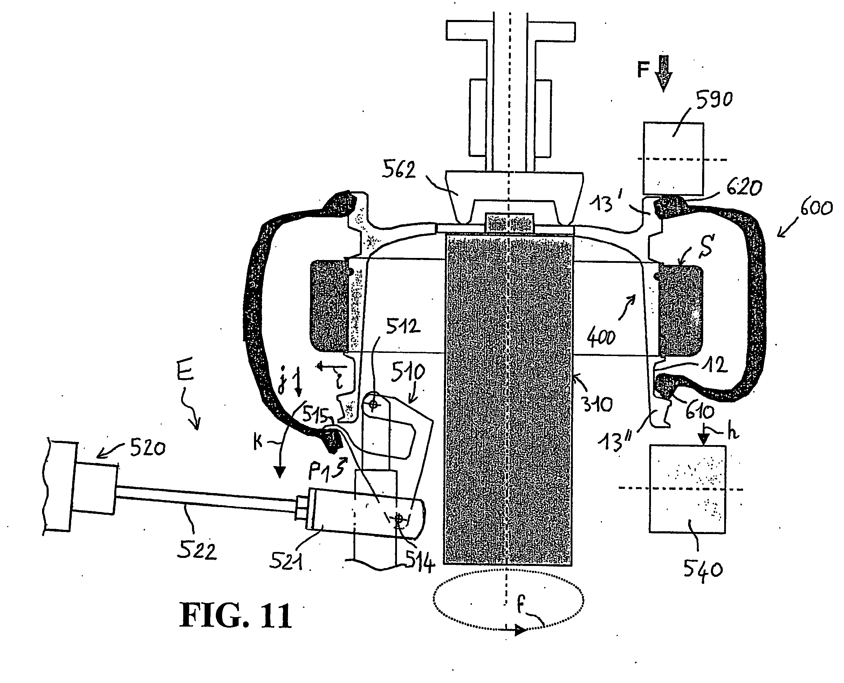

Comme cela est visible à la Fig. 11, l'électronique de commande retire, d'une part, le patin supérieur 570 (non représenté) du premier bourrelet 620 tout en maintenant le galet supérieur de montage 590 sur ledit bourrelet 620, et, d'autre part, le galet inférieur de montage 540 en commandant son déplacement axialement vers l'extérieur du second siège 13" (voir flèche h).

En même temps, tout en maintenant la rotation de l'ensemble (roue 400, appui S, enveloppe 600), l'électronique de commande fait passer la biellette d'extraction 510 de ladite position P2 (commune aux Figs. 4 à 10), dans laquelle le crochet 515 est disposé radialement sous le second bourrelet 610 au fond de la gorge de montage 12, à ladite position P1 (illustrée aux Figs. 4 et 11), dans laquelle le crochet 515 est situé axialement sous ledit bourrelet 610 et axialement à l'extérieur du second siège de jante 13".

Cette électronique fait passer la biellette 515 de la position P2 à la position P1 en réalisant les opérations susmentionnées en relation avec la Fig. 4 dans l'ordre inverse.

Ainsi, elle actionne dans un premier temps le moyen de positionnement radial 532 pour élever le bloc d'extraction E et, par conséquent, le crochet 515 radialement à l'extérieur de la gorge de montage 12 (voir la flèche i illustrant cette translation radiale vers l'extérieur).

Puis, dans un deuxième temps, l'électronique actionne le moyen de positionnement axial 531 pour déplacer dans la direction verticale descendante le bloc d'extraction E (voir la flèche j) et, par conséquent le crochet 515, pour que celui-ci puisse pivoter par la suite sans entrave autour du pivot 512.

Ensuite, dans un troisième temps, elle actionne le vérin 520 pour que sa course soit augmentée dans une mesure telle qu'elle fasse décrire audit pivot « mobile » 514, via la patte 521, un arc de cercle autour dudit pivot « fixe » 512 (voir la flèche k) de manière que le crochet 515 décrive également un arc de cercle axialement vers l'extérieur du second siège 13".

On voit à la Fig. 11 que ce pivotement de la biellette 510 autour du pivot 512 a pour effet, d'une part, d'extraire le second bourrelet 610 de la gorge de montage 12, du fait que ce bourrelet 610 est poussé axialement vers l'extérieur de la gorge 12 en étant guidé par la courbure du crochet 515 lors de ce pivotement et, d'autre part, d'amener ce bourrelet 610 axialement à l'extérieur du second siège 13".

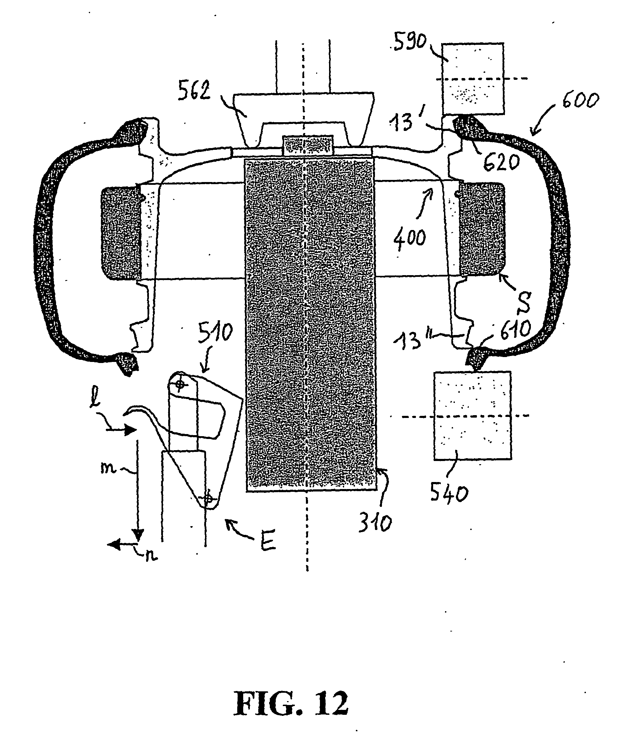

Comme cela est visible à la Fig. 12, cette extraction du second bourrelet 610 axialement à l'extérieur du second siège 13" est réalisée sur toute la circonférence dudit bourrelet 610, du fait de la rotation concomitante de l'enveloppe 600 et de la roue 400. Suite à cette extraction, on voit à la Fig. 12 que le galet inférieur de montage 540 se trouve axialement sous le second bourrelet 610. L'électronique de commande stoppe ensuite la rotation de l'arbre 310, et éloigne le bloc d'extraction E de du bourrelet 610 et du second siège 13" en lui faisant subir des translations dans le sens des flèches 1, m et n (i.e. radialement vers l'intérieur pour retirer le crochet 515 du second bourrelet 13", puis axialement vers l'extérieur et enfin radialement vers l'extérieur, respectivement).

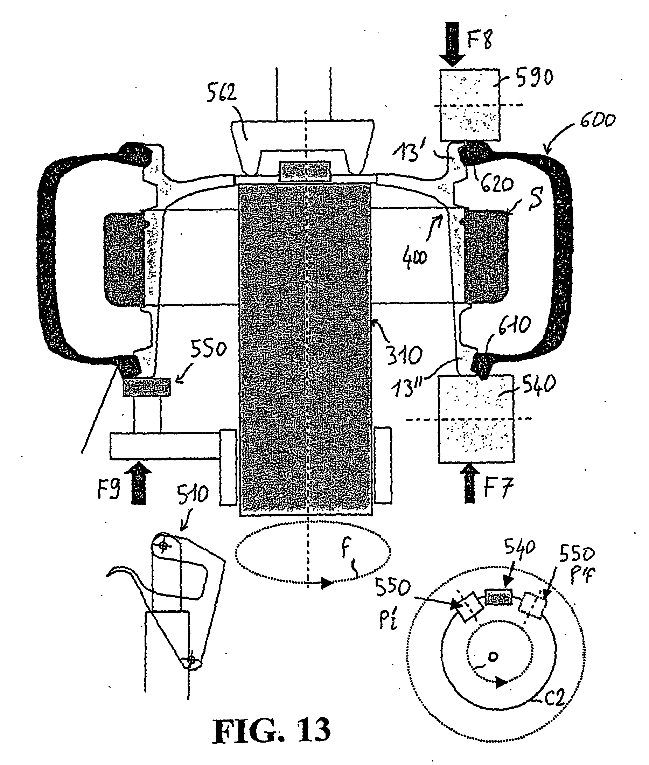

Une quatrième étape du procédé de montage de l'invention est illustrée aux Figs. 13, 14.

Comme cela est visible à la Fig. 13, l'électronique de commande actionne à nouveau l'arbre 310 pour entraîner en rotation l'ensemble (jante 400, enveloppe 600, appui S) puis elle commande le déplacement axialement vers l'intérieur du galet inférieur de montage 540 pour que celui-ci pousse le second bourrelet 610 de manière à le monter sur le second siège 13" (voir flèche de force F7), tout en exerçant également une force de poussée sur le galet supérieur de montage 590 (voir flèche de force F8) pour que ce dernier appuie axialement sur le premier bourrelet 620 et sur la jante 400 de sorte à s'opposer à ladite force F7.

En même temps qu'elle commande la poussée du galet inférieur 540, l'électronique commande l'application du patin inférieur 550 directement sous le second bourrelet 610 (voir flèche de force F9) tout en le faisant pivoter au contact de ce dernier autour de l'arbre 310 sur un arc de cercle C2 représenté sur la vue en médaillon incluse dans la Fig. 13.

On voit sur ce médaillon que cet arc de cercle C2 est par exemple décrit à partir d'une position initiale P'i où le patin 550 est immédiatement adjacent au galet inférieur 540 d'un côté de celui-ci, dans un sens de rotation (voir flèche circulaire o) où le patin 550 s'éloigne du galet 540 et jusqu'à une position finale P'f où ledit patin 540 est immédiatement adjacent audit galet 540 de l'autre côté de celui-ci. Le trajet suivi par le patin 550 est donc symétrique par rapport au galet 540 dans cet exemple de réalisation.

On notera que le pivotement de ce patin 550 au contact du second bourrelet 610 contribue à maintenir toute la circonférence de ce dernier dans la position de montage sur le siège 13" qui est obtenue via l'action du galet de montage 540.

Puis, comme cela est visible à la Fig. 14, qui représente l'ensemble (roue 400, enveloppe 600, appui S) dans la position finale de montage, l'électronique de commande stoppe la rotation de l'arbre 310, commande le retrait de l'organe de maintien 560 axialement vers l'extérieur puis radialement à l'écart de l'axe 311 dudit arbre 310 (voir flèches p et q) de manière à retirer l'embout de poussée 562 du disque de roue 420, commande le retrait axialement et radialement vers l'extérieur des galets de montage 540 et 590 (voir flèches r, s, t et u), et ramène le bloc d'extraction E dans sa position initiale via une translation axialement vers l'intérieur (voir flèche v, i.e. avant la translation illustrée par ladite flèche a de la Fig 4).

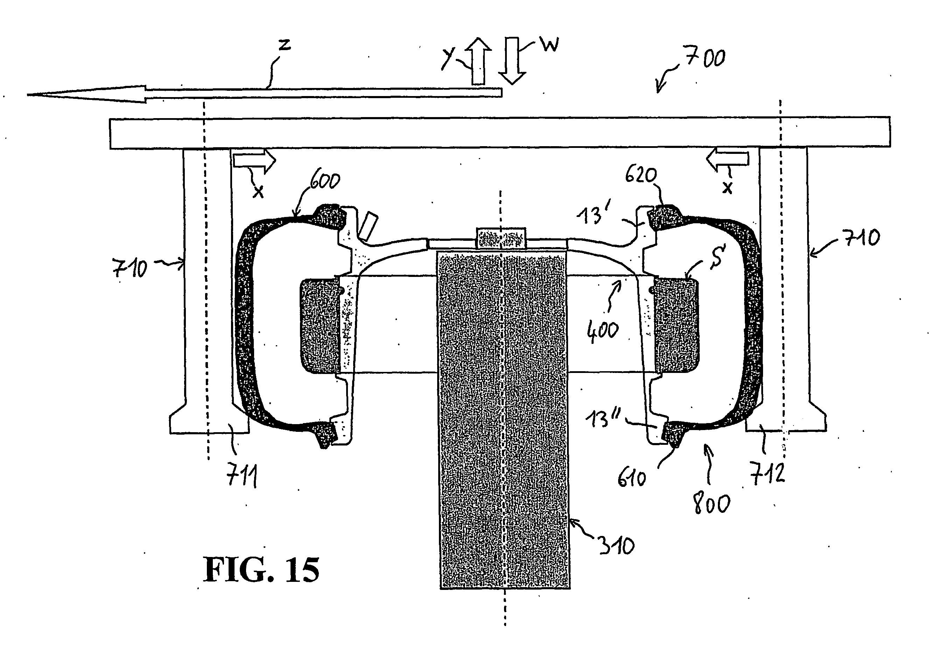

Comme cela est visible à la Fig. 15, l'électronique de commande actionne ensuite vers le bas le moyen de coulissement vertical 730 (non représenté) dont est pourvu le moyen de retrait 700, de telle manière que les extrémités respectives 711, 712 des bras verticaux de préhension 710 soient abaissées sensiblement à la hauteur du second bourrelet 610 de l'enveloppe 600 (voir flèche w), puis elle commande le rapprochement relatif desdits bras 710 (voir flèches x) de telle sorte que ceux-ci saisissent l'ensemble monté 800.

L'électronique de commande actionne ensuite ledit moyen de coulissement vertical 730 vers le haut (voir flèche y) pour dégager l'ensemble monté 800 des moyens de montage 500, puis elle actionne latéralement (voir flèche z) le moyen de coulissement horizontal 740 (non représenté) de manière à transférer cet ensemble monté 800 vers un emplacement approprié en vue de son stockage.

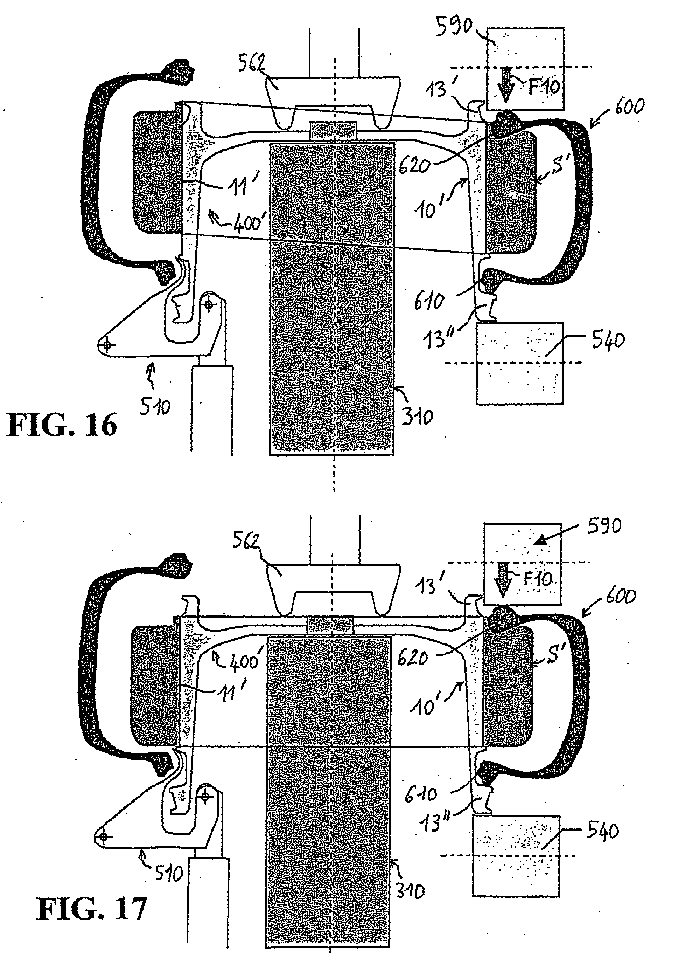

Les Figs. 16 et 17 illustrent un autre exemple de mise en oeuvre d'un procédé de montage selon l'invention, dans lequel l'appui S' présente une largeur supérieure à celle de l'appui S représenté aux Figs. 1 et 3 à 15, cet appui S' étant destiné à être monté sur la totalité de largeur (dimension axiale) de la portée 11' de la jante 10' et ne comportant pas de protubérance circonférentielle 30 pour son montage sur la portée 11' (laquelle est dépourvue de rainure 115).

Pour la description du procédé de montage inhérent à cette structure de jante 10' et d'appui S', on peut se référer à la description qui vient d'être faite en relation avec les Figs. 4 à 15, à l'exception toutefois des Figs. 6 à 9 (concernant ladite seconde étape du procédé selon l'invention) qui sont à remplacer par les Figs. 16 et 17.

Comme cela est visible à la Fig. 16, on utilise seulement ledit galet supérieur de montage 590 pour monter l'appui S' sur la jante 10'. Pour ce faire, l'électronique de commande procède, d'une part, à une poussée axiale de ce galet 590 sur le premier bourrelet 620, ce qui a pour effet de mettre en place localement ledit appui S' sur la portée 11' (voir flèche de force F10) et, d'autre part, de positionner le galet inférieur de montage 540 au plus près du second siège de jante 13", puis elle actionne l'ensemble (roue 400', enveloppe 600, appui S') en rotation via l'arbre 310 pour que l'appui S' soit correctement monté sur la portée 11' sur toute sa circonférence.

On notera que le procédé de montage selon l'invention permet de monter efficacement, d'une manière automatisée et en un temps réduit une enveloppe pourvue d'un appui de sécurité sur une jante de roue, quelle que soient le type et les dimensions de l'appui utilisé.

## Revendications

1. Procédé de montage sur une jante (10, 10') de roue (400, 400'), d'une part, d'une enveloppe de pneumatique (600), comportant un premier et un second bourrelets (620, 610) respectivement destinés à être montés sur un premier et un second sièges (13', 13") de ladite jante (10, 10') et, d'autre part, d'un appui de sécurité (S, S') destiné à être monté dans l'espace interne à ladite enveloppe (600) sur une portée (11, 11') de ladite jante (10, 10') en vue de soutenir la bande de roulement de ladite enveloppe (600) en cas de chute de pression à l'intérieur de celle-ci, lesdits premier et second sièges (13', 13") étant chacun prolongés axialement à l'extérieur par une saillie (15', 15"), l'extrémité axialement intérieure (17) de l'un au moins desdits sièges (13', 13") décrivant un cercle de diamètre supérieur à celui du cercle décrit par l'extrémité axialement extérieure (15', 15") du même siège (13', 13"), ledit premier siège (13') étant relié axialement à l'intérieur à ladite portée (11, 11'), laquelle est reliée audit second siège (13 ") par une gorge de montage (12), ledit procédé comprenant les étapes successives suivantes :
(a) on amène sur ladite jante (10, 10') ladite enveloppe (600) pourvue dudit appui (S, S') dans son espace interne, en présentant ledit second bourrelet (610) du côté dudit premier siège (13'),
(b) on fait glisser ledit second bourrelet (610) axialement sur ladite portée (11, 11') de manière à l'introduire dans ladite gorge (12) et à mettre partiellement en place ledit appui (S, S') sur ladite portée (11, 11'), ledit premier bourrelet (620) se trouvant alors axialement à l'extérieur dudit premier siège (13'),
(c) on enfile totalement ledit appui (S, S') sur ladite portée (11, 11'),
(d) on monte ledit premier bourrelet (620) sur ledit premier siège (13'),
(e) on extrait ledit second bourrelet (610) de ladite gorge (12) de manière à l'amener axialement à l'extérieur de ladite saillie (15") dudit second siège (13 "),
(f) on monte ledit second bourrelet (610) sur ledit second siège (13"),
**caractérisé en ce que**, avant de mettre en oeuvre ladite étape (b), on met en place au fond de ladite gorge (12) un moyen d'extraction (510) dudit second bourrelet (610) et **en ce que**, pour mettre en oeuvre ladite étape (e), on guide ledit second bourrelet (610) axialement vers l'extérieur de ladite gorge (12) et dudit second siège (13") en faisant pivoter ledit moyen d'extraction (510) autour d'un axe (512) situé radialement à l'intérieur de ladite jante (10, 10').

2. Procédé de montage selon la revendication 1, **caractérisé en ce que** l'on entraîne solidairement en rotation ladite jante (10, 10'), ladite enveloppe (600) et ledit appui (S, S') autour de l'axe de révolution de ladite jante (10, 10') pour mettre en oeuvre ladite étape (e) sur la circonférence de ladite jante (10, 10').

3. Procédé de montage selon la revendication 1 ou 2, **caractérisé en ce que :**
(i) avant de mettre en oeuvre ladite étape (c), on écarte ledit premier bourrelet (620) radialement vers l'extérieur dudit premier siège (13') en même temps que l'on amène un moyen de poussée (585) dudit appui (S) radialement à la hauteur de ce dernier et **en ce que**,
(ii) pour mettre en oeuvre ladite étape (c), on déplace axialement vers l'intérieur ledit moyen de poussée (585) de manière qu'il pousse progressivement ledit appui (S) sur ladite portée (11) en direction dudit second siège (13"), en même temps que l'on maintient ledit premier bourrelet (620) axialement et radialement à l'extérieur dudit premier siège (13') en entraînant solidairement en rotation ladite jante (10), ladite enveloppe (600) et ledit appui (S) autour de l'axe de révolution de ladite jante (10).

4. Procédé de montage selon la revendication 3, **caractérisé en ce que**, avant l'opération (i), on exerce localement une force axiale (F1) sur un flanc (630) de ladite enveloppe (600) prolongeant ledit second bourrelet (610), de sorte à amener ledit premier bourrelet (620) axialement vers l'extérieur dudit appui (S) et à créer un espace local (e) entre ledit premier bourrelet (620) et le bord latéral adjacent (S1) dudit appui (S) qui soit suffisant pour pouvoir écarter ledit premier bourrelet (620) radialement vers l'extérieur.

5. Procédé de montage selon une des revendications précédentes, **caractérisé en ce qu'**il consiste à maintenir dans la direction de la pesanteur l'axe de révolution de ladite jante (10, 10') pourvue dudit appui (S, S') et de ladite enveloppe (600), pour mettre en oeuvre les étapes (a) à (f).

6. Unité de montage pour la mise en oeuvre du procédé selon une des revendications précédentes, ladite unité comportant un moyen de réception (300) destiné à recevoir ladite roue (400, 400') pourvue dudit appui (S, S') et de ladite enveloppe (600) et à l'entraîner en rotation autour de son axe de révolution, et un moyen d'extraction (510) qui est adapté pour extraire ledit second bourrelet (610) de ladite gorge de montage (12) au moyen d'un crochet (515) et qui comporte une biellette (510) articulée sur un axe fixe de pivotement (512) et destinée à faire pivoter ledit crochet (515) autour dudit axe fixe (512) par l'intermédiaire d'un moyen de commande (520) de ladite biellette (510), **caractérisée en ce que** ledit crochet (515) est formé sur ladite biellette (510).

7. Unité de montage selon la revendication 6, **caractérisée en ce que** ledit moyen de commande (520) comporte un vérin dont la tige (522) est articulée sur ladite biellette (510) de telle sorte qu'une variation de course dudit vérin (520) fasse pivoter ledit crochet (515) autour dudit axe fixe de pivotement (512).

8. Unité de montage selon la revendication 6 ou 7, **caractérisée en ce que** ledit crochet (515) présente une courbure adaptée pour épouser le contour du fond de ladite gorge (12).

9. Unité de montage selon la revendication 8, **caractérisée en ce qu'**une encoche (517) en forme de « U », adaptée pour épouser pratiquement le contour dudit second siège (13 "), est formée dans ladite biellette (510) entre ledit crochet (515) et ledit axe fixe de pivotement (512).

10. Unité de montage selon une des revendications 6 à 9, **caractérisée en ce qu'**elle comporte des moyens de positionnement (531 et 532) dudit moyen d'extraction (510) et dudit moyen de commande (520) dans les directions axiale et radiale par rapport à la jante (10, 10').

11. Unité de montage selon une des revendications 6 à 10, **caractérisée en ce qu'**elle comporte un doigt de préhension (580) dont l'extrémité libre (583) présente une courbure adaptée pour saisir ledit premier bourrelet (620), un moyen de poussée (585) dudit appui (S) étant monté sur ladite extrémité (583) du côté dudit doigt (580) qui est opposé à ladite courbure, ledit doigt (580) étant relié à des moyens de commande (584) pour commander son déplacement, d'une part, dans la direction radiale par rapport à ladite jante (10) de sorte à pouvoir écarter radialement vers l'extérieur ledit premier bourrelet (620) et, d'autre part, dans la direction axiale par rapport à ladite jante (10) de sorte que ledit moyen de poussée (585) pousse ledit appui (S) sur ladite jante (10) et que le côté dudit doigt (580) en regard de ladite courbure forme une rampe de glissement pour ledit premier bourrelet (620) lors de cette poussée.

12. Unité de montage selon la revendication 11, **caractérisée en ce que** ledit doigt de préhension (580) est pourvu, du même côté sur lequel est monté ledit moyen de poussée (585) et à l'opposé de ladite extrémité (583), d'un galet de montage (590) destiné à monter ledit premier bourrelet (620) sur ledit premier siège (13'), ledit doigt de préhension (580) étant monté pivotant de sorte que, en alternance, ledit moyen de poussée (585) et ledit galet de montage (590) puissent être positionnés axialement d'une manière adjacente audit appui (S) et audit premier bourrelet (620), respectivement, par un pivotement de 180° dudit doigt de préhension (580).

13. Unité de montage selon une des revendications 6 à 12, **caractérisée en ce que** ledit moyen de réception (300) est prévu pour immobiliser ledit axe de révolution de ladite roue (400, 400') dans la direction de la pesanteur.

## Claims

1. Process for mounting on a rim (10, 10') of a wheel (400, 400'), on the one hand a tyre (600) comprising a first and a second bead (620, 610) respectively intended for fitting on a first and a second seat (13', 13") of the said rim (10, 10') and, on the other hand, a safety support (S, S') designed for fitting in the inside space of the said tyre (600) on a bearing surface (11, 11') of the said rim (10, 10') with a view to supporting the tread of the said tyre (600) in the event of a fall in pressure inside the latter, the said first and second seats (13', 13") each being extended axially outwards by a projection (15', 15"), the axially inner edge (17) of at least one of the said seats (13', 13") describing a circle of diameter larger than that of the circle described by the axially outer edge (15', 15") of the same seat (13', 13"), the said first seat (13') being axially joined to the inside of the said bearing surface (11, 11'), which is connected to the said second seat (13") by a mounting groove (12), the said process comprising the following successive stages:
(a) the said tyre (600) provided with the said support (S, S') in its inside space is placed on the said rim (10, 10') by offering the said second bead (610) on the side of the said first seat (13'),
(b) the said second bead (610) is slipped axially over the said bearing surface (11, 11') so as to introduce it into the said groove (12) and so as to place the said support (S, S') partially in position over the said bearing surface (11, 11'), the said first bead (620) then being located axially outside the said first seat (13'),
(c) the said support (S, S') is then fitted fully onto the said bearing surface (11, 11'),
(d) the said first bead (620) is mounted on the said first seat (13'),
(e) the said second bead (610) is extracted from the said groove (12) so as to bring it axially outside the said projection (15") of the said second seat (13"),
(f) the said second bead (610) is mounted onto the said second seat (13"),
**characterised in that**
before implementing the said stage (b), a means (510) for extracting the said second bead (610) is positioned at the bottom of the said groove (12), and to implement the said stage (e), the said second bead (610) is guided axially towards the outside of the said groove (12) and of the said second seat (13") by pivoting the said extraction means (510) around an axis (512) located radially on the inside of the said rim (10, 10').

2. Mounting process according to Claim 1, **characterised in that** the said rim (10, 10'), tyre (600) and support (S, S') are driven together in rotation about the axis of revolution of the said rim (10, 10') to implement the said stage (e) all round the circumference of the said rim (10, 10').

3. Mounting process according to Claims 1 or 2, **characterised in that**
(i) before implementing the said stage (c), the said first bead (620) is moved radially towards the outside of the said first seat (13') at the same time as a mean (585) for pushing the said support (S) radially is brought to the level of the latter, and
(ii) to implement the said stage (c), the said pushing means (585) is displaced axially inwards so that it progressively pushes the said support (S) onto the said bearing surface (11) in the direction of the said second seat (13"), and at the same time the said first bead (620) is kept axially and radially outside the said first seat (13') while driving together in rotation the said rim (10), tyre (600) and support (S) about the revolution axis of the said rim (10).

4. Mounting process according to Claim 3, **characterised in that** before operation (i), an axial force (F1) is applied to a sidewall (630) of the said tyre (600) that extends the said second bead (610), so as to bring the said first bead (620) axially towards the outside of the said support (S) and to create a local space (e) between the said first bead (620) and the adjacent lateral edge (S1) of the said support (S) large enough to be able to move the said first bead (620) radially outwards.

5. Mounting process according to any of the preceding claims, **characterised in that** it consists in maintaining the revolution axis of the said rim (10, 10') provided with the said support (S, S') and the said tyre (600) in the direction of gravity when implementing the stages (a) to (f).

6. Mounting unit for implementing the process according to any of the preceding claims, the said unit comprising a receiving means (300) designed to receive the said wheel (400, 400') provided with the said support (S, S') and the said tyre (600) and to drive it in rotation about its revolution axis, and an extraction means (510) designed to extract the said second bead (610) from the said mounting groove (12) by means of a hook (515) and comprising a lever (510) articulated on a fixed pivoting axis (512) and designed to pivot the said hook (515) around the said fixed axis (512) via a means (520) for controlling the said lever (510), **characterised in that** the said hook (515) is formed on the said lever (510).

7. Mounting unit according to Claim 6, **characterised in that** the said control means (520) comprises a jack whose shaft (522) is articulated to the said lever (510) in such manner that a variation of the stroke of the said jack (520) causes the said hook (515) to pivot around the said fixed pivoting axis (512).

8. Mounting unit according to Claims 6 or 7, **characterised in that** the said hook (515) has a curvature designed to match the contour of the bottom of the said groove (12).

9. Mounting unit according to Claim 8, **characterised in that** a recess (517) in the shape of a "U", designed practically to match the contour of the said second seat (13"), is formed in the said lever (510) between the said hook (515) and the second fixed pivoting axis (512).

10. Mounting unit according to any of Claims 6 to 9, **characterised in that** it comprises means (531 and 532) for positioning the said extraction means (510) and the said control means (520) in the axial and radial directions relative to the rim (10, 10').

11. Mounting unit according to any of Claims 6 to 10, **characterised in that** it comprises a gripping finger (580) whose free end (583) has a curvature designed to grip the said first bead (620), a means (585) for pushing the said support (S) being mounted on the said end (583) on the side of the said finger (580) opposite to the said curvature, the said finger (580) being connected to control means (584) for controlling its displacement, on the one hand in the radial direction relative to the said rim (10) so as to be able to move the said first bead (620) radially towards the outside, and on the other hand in the axial direction relative to the said rim (10) so that the said pushing means (585) pushes the said support (S) onto the said rim (10) and the side of the said finger (580) facing the said curvature forms a slide ramp for the said first bead (620) during this pushing movement.

12. Mounting unit according to Claim 11, **characterised in that** the said gripping finger (580) is provided on the said side where the pushing means (585) is fitted and opposite the said end (583), with a mounting roller (590) designed to mount the said first bead (620) on the said first seat (13'), the said gripping finger (580) being mounted to pivot in such manner that, in alternation, the said pushing means (585) and the said mounting roller (590) can be positioned axially adjacent to the said support (S) and to the said first bead (620), respectively, by pivoting the said gripping finger (580) through 180°.

13. Mounting unit according to any of Claims 6 to 12, **characterised in that** the said receiving means (300) is designed to immobilise the said revolution axis of the said wheel (400, 400') in the direction of gravity.

## Patentansprüche

1. Verfahren zum Montieren auf eine Felge (10, 10') eines Rads (400, 400') einerseits eines Luftreifenmantels (600), der einen ersten und einen zweiten Wulst (620, 610) aufweist, die je dazu bestimmt sind, auf einen ersten bzw. zweiten Sitz (13', 13") der Felge (10, 10') montiert zu werden, und andererseits einer Sicherheitseinlage (S, S'), die dazu bestimmt ist, im Innenraum des Mantels (600) auf eine Auflagefläche (11, 11') der Felge (10, 10') montiert zu werden, um die Lauffläche des Mantels (600) im Fall eines Druckabfalls in dessen Innerem zu stützen, wobei der erste und der zweite Sitz (13', 13") je axial nach außen von einem Vorsprung (15', 15") verlängert werden, wobei dass axial innere Ende (17) mindestens einer der Sitze (13', 13") einen Kreis mit einem Durchmesser beschreibt, der größer ist als derjenige des Kreises, der von dem axial äußeren Ende (15', 15") des gleichen Sitzes (13', 13") beschrieben wird, wobei der erste Sitz (13') axial innen mit der Auflagefläche (11, 11') verbunden ist, die mit dem zweiten Sitz (13") über eine Montagerille (12) verbunden ist, wobei das Verfahren die folgenden aufeinanderfolgenden Schritte aufweist:
(a)der in seinem Innenraum mit der Einlage (S, S') versehene Mantel (600) wird auf die Felge (10, 10') gebracht, indem der zweite Wulst (610) auf der Seite des ersten Sitzes (13') präsentiert wird,
(b)der zweite Wulst (610) wird axial auf die Auflagefläche (11, 11') geschoben, um ihn in die Rille (12) einzuführen und die Einlage (S, S') teilweise auf der Auflagefläche (11, 11') anzuordnen, wobei der erste Wulst (620) sich dann axial außerhalb des ersten Sitzes (13') befindet,
(c)die Einlage (S, S') wird vollständig auf die Auflagefläche (11, 11') aufgeschoben,
(d)der erste Wulst (620) wird auf den ersten Sitz (13') montiert,
(e)der zweite Wulst (610) wird aus der Rille (12) entnommen, um ihn axial nach außerhalb des Vorsprungs (15") des zweiten Sitzes (13") zu bringen,
(f)der zweite Wulst (610) wird auf den zweiten Sitz (13") montiert,
**dadurch gekennzeichnet, dass** vor der Durchführung des Schritts (b) am Boden der Rille (12) ein Entnahmemittel (510) des zweiten Wulsts (610) eingesetzt wird, und dass zur Durchführung des Schritts (e) der zweite Wulst (610) axial nach außerhalb der Rille (12) und des zweiten Sitzes (13") geführt wird, indem das Entnahmemittel (510) um eine Achse (512) geschwenkt wird, die sich radial innerhalb der Felge (10, 10') befindet.

2. Montageverfahren nach Anspruch 1, **dadurch gekennzeichnet, dass** die Felge (10, 10'), der Mantel (600) und die Einlage (S, S') zusammen um die Drehachse der Felge (10, 10') in Drehung versetzt werden, um den Schritt (e) auf dem Umfang der Felge (10, 10') durchzuführen.

3. Montageverfahren nach Anspruch 1 oder 2, **dadurch gekennzeichnet, dass:**
(i) vor der Durchführung des Schritts (c) der erste Wulst (620) radial nach außerhalb des ersten Sitzes (13') gespreizt wird, während gleichzeitig ein Mittel (585) zum Schieben der Einlage (S) radial auf die Höhe dieser letzteren gebracht wird, und dass,
(ii) um den Schritt (c) durchzuführen, das Schubmittel (585) axial nach innen verschoben wird, damit es die Einlage (S) progressiv auf die Auflagefläche (11) in Richtung des zweiten Sitzes (13") schiebt, während gleichzeitig der erste Wulst (620) axial und radial außerhalb des ersten Sitzes (13') gehalten wird, indem die Felge (10), der Mantel (600) und die Einlage (S) zusammen um die Drehachse der Felge (10) in Drehung versetzt werden.

4. Montageverfahren nach Anspruch 3, **dadurch gekennzeichnet, dass** vor dem Vorgang (i) lokal eine axiale Kraft (F1) auf eine Flanke (630) des Mantels (600) ausgeübt wird, die den zweiten Wulst (610) verlängert, um den ersten Wulst (620) axial nach außerhalb der Einlage (S) zu bringen und einen lokalen Raum (e) zwischen dem ersten Wulst (620) und dem benachbarten Seitenrand (S1) der Einlage (S) zu erzeugen, der ausreicht, um den ersten Wulst (620) radial nach außen spreizen zu können.

5. Montageverfahren nach einem der vorhergehenden Ansprüche, **dadurch gekennzeichnet, dass** es darin besteht, die Drehachse der mit der Einlage (S, S') und dem Mantel (600) versehenen Felge (10, 10') in Richtung der Schwerkraft zu halten, um die Schritte (a) bis (f) durchzuführen.

6. Montageeinheit zur Durchführung des Verfahrens nach einem der vorhergehenden Ansprüche, wobei die Einheit ein Aufnahmemittel (300), das dazu bestimmt ist, das mit der Einlage (S, S') und dem Mantel (600) versehene Rad (400, 400') aufzunehmen und es um seine Drehachse in Drehung zu versetzen, und ein Entnahmemittel (510) aufweist, das geeignet ist, um den zweiten Wulst (610) mittels eines Hakens (515) aus der Montagerille (12) zu entnehmen, und das einen Schwingarm (510) aufweist, der an einer festen Schwenkachse (512) angelenkt und dazu bestimmt ist, den Haken (515) mittels eines Steuermittels (520) des Schwingarms (510) um die feste Achse (512) schwenken zu lassen, **dadurch gekennzeichnet, dass** der Haken (515) auf dem Schwingarm (510) ausgebildet ist.

7. Montageeinheit nach Anspruch 6, **dadurch gekennzeichnet, dass** das Steuermittel (520) einen Arbeitszylinder aufweist, dessen Stange (522) an den Schwingarm (510) angelenkt ist, so dass eine Hubveränderung des Arbeitszylinders (520) den Haken (515) um die Schwenkachse (512) schwenken lässt.

8. Montageeinheit nach Anspruch 6 oder 7, **dadurch gekennzeichnet, dass** der Haken (515) eine geeignete Krümmung aufweist, um sich dem Umriss des Bodens der Rille (12) anzupassen.

9. Montageeinheit nach Anspruch 8, **dadurch gekennzeichnet, dass** eine "U"-förmige Kerbe (517), die geeignet ist, um sich praktisch dem Umriss des zweiten Sitzes (13") anzupassen, in dem Schwingarm (510) zwischen dem Haken (515) und der festen Schwenkachse (512) geformt ist.

10. Montageeinheit nach einem der Ansprüche 6 bis 9, **dadurch gekennzeichnet, dass** sie Positioniermittel (531 und 532) des Entnahmemittels (510) und des Steuermittels (520) in der axialen und der radialen Richtung bezüglich der Felge (10, 10') aufweist.

11. Montageeinheit nach einem der Ansprüche 6 bis 10, **dadurch gekennzeichnet, dass** sie einen Greiffinger (580) aufweist, dessen freies Ende (583) eine geeignete Krümmung aufweist, um den ersten Wulst (620) zu ergreifen, wobei ein Schubmittel (585) der Einlage (S) auf das Ende (583) auf der Seite des Fingers (580) montiert ist, die der Krümmung entgegengesetzt liegt, wobei der Finger (580) mit Steuermitteln (584) verbunden ist, um seine Verschiebung einerseits in der radialen Richtung bezüglich der Felge (10), um den ersten Wulst (620) radial nach außen spreizen zu können, und andererseits in der axialen Richtung bezüglich der Felge (10) zu steuern, damit das Schubmittel (585) die Einlage (S) auf die Felge (10) schiebt und die Seite des Fingers (580) gegenüber der Krümmung bei diesem Schub eine Gleitrampe für den ersten Wulst (620) bildet.

12. Montageeinheit nach Anspruch 11, **dadurch gekennzeichnet, dass** der Greiffinger (580) auf der gleichen Seite, auf der das Schubmittel (585) montiert ist, und entgegengesetzt zu dem Ende (583) mit einer Montagelaufrolle (590) versehen ist, die dazu bestimmt ist, den ersten Wulst (620) auf den ersten Sitz (13') zu montieren, wobei der Greiffinger (580) schwenkbar montiert ist, so dass durch eine Drehung des Greiffingers (580) um 180° das Schubmittel (585) und die Montagelaufrolle (590) abwechselnd der Einlage (S) bzw. dem ersten Wulst (620) axial benachbart positioniert werden können.

13. Montageeinheit nach einem der Ansprüche 6 bis 12, **dadurch gekennzeichnet, dass** das Aufnahmemittel (300) vorgesehen ist, um die Drehachse des Rads (400, 400') in Richtung der Schwerkraft zu fixieren.
